# EUROPEAN PATENT SPECIFICATION

(11) **EP 2 202 133 B1**
(45) Date of publication and mention of the grant of the patent: **11.12.2013**
(21) Application number: 09380188.4
(22) Date of filing: 16.12.2009
(51) Int. Cl.: B62D 25/16, B62D 27/02

(54) **A stiffening element for the rear flanks of motor vehicle bodies**
Verstärkungselement für die hinteren Kotflügel einer Fahrzeugkarosserie
Elément de rigidification pour une aile arrière d'une véhicule

(30) Priority: 29.12.2008 ES 200802658 U
(43) Date of publication of application: 30.06.2010
(73) Proprietor: Seat, S.A., 08760 Martorell, Barcelona (ES)
(72) Inventor: Viva Iñigo, Francisco Javier, 08760 Martorell Barcelona (ES); Callau Sanchez, José Luis, 08760 Martorell Barcelona (ES); Carreras Vilalta, José, 08760 Martorell Barcelona (ES)
(74) Representative: Isern-Jara, Nuria

(56) References cited:
- EP-A2- 1 264 757
- DE-A1-102008 057 352
- JP-A- 2000 177 647
- JP-U- 61 005 271
- US-A- 4 973 103

## Description

### Field of the invention

The present invention relates to a stiffening element for the rear flanks of motor vehicle bodies, aimed at providing greater strength to this area of the body and, mainly, greater comfort, as it serves as a means for eliminating or reducing vibrations and noises produced at this area of the body, especially when closing the vehicle rear doors.

### Background of the invention

The rear flanks of the body of a motor vehicle comprise an external wall and an internal wall which converge and are joined to one another at their upper part, while at the lower part they are supported and joined on the rear wheel arch as e.g. shown in document EP 1264757 A2. A chamber is delimited by these components, at the top of which the internal and external walls of the flank are arranged separately and produce noises, especially when closing the rear doors, due to the vibrations originated on the two walls.

It is well known the application of coatings based on bituminous materials on the walls of the flank in order to reduce this effect, resulting in an expensive and not very effective solution.

### Description of the invention

The object of the present invention is achieving a maximum reduction of vibrations and noises in the rear flanks of a vehicle body by means of the inclusion of a stiffener between the internal and external walls of said flanks, with which the flanks are strengthened so as to prevent them from vibrating, both when closing the rear doors and while the vehicle is moving.

According to the present invention according claim 1, between the internal and external walls of the rear flanks and the corresponding rear wheel arch a transverse reinforcement plate is provided, running in an approximately vertical position and being supported and joined on the aforementioned walls and wheel arch.
To that end, the reinforcement plate presents vertical edges which coincide with the outline of the opposite areas of the aforementioned internal and external walls, as well as a lower transverse edge that coincides with the opposite area of the rear wheel arch, thus achieving a continuous support of the vertical and lower transverse edges of the reinforce plate on the internal and external walls of the flanks and the corresponding wheel arch. The upper transverse edge of the reinforcement plate passes between the external and internal walls of the flanks, without reaching them.

The joint of the reinforcement plate to the internal wall and to the corresponding wheel arch will be preferably carried out by means of welding, while the joint to the external wall of the flank will be made by means of an adhesive.

The reinforcement plate is limited along its entire outline and on one of its surfaces by a peripheral rib through which it is supported on and joined to the walls and wheel arch of the flanks.

In order to reduce its weight, this reinforcement plate may have intermediate openings, preferably of circular outline and edges arranged to act as a reinforcement means as well.

The edge formed between the reinforcement plate and the peripheral rib thereof is rounded and provided with transverse deep drawings that will also serve as a reinforcement element.

In order to facilitate the correct placement of the reinforcement plate within the corresponding flank, the peripheral rib of said plate and the opposite surface of at least one of the flank walls to which it is joined, present points of reference, the coincident position of which defines the correct assembling position of the reinforcement plate. These points of reference may consist of some facing orifices featured on the rib and the internal wall of the flank in the areas of joint support.

The arrangement of the reinforcement plate in the way described herein serves as a stiffening element between the internal and external walls and the wheel arch of the flanks, preventing the vibration of these components and thus the noise that may be produced by these vibrations, especially when closing the rear doors.

### Brief description of the drawings

The attached drawings show an example of a non-limiting embodiment, wherein:
Figure 1 is a lateral elevation view of a vehicle body.
Figure 2 is a cross-sectional view of the same body, according to the cut line II-II of Figure 1.
Figure 3 shows a section similar to Figure 2, corresponding to the support area between the reinforcement plate and the walls and wheel arch of the right flank of the body.
Figure 4 is a perspective view of the reinforcement plate, from the concave side thereof.
Figure 5 is a perspective view of the same plate, from the convex side.

### Detailed description of an embodiment

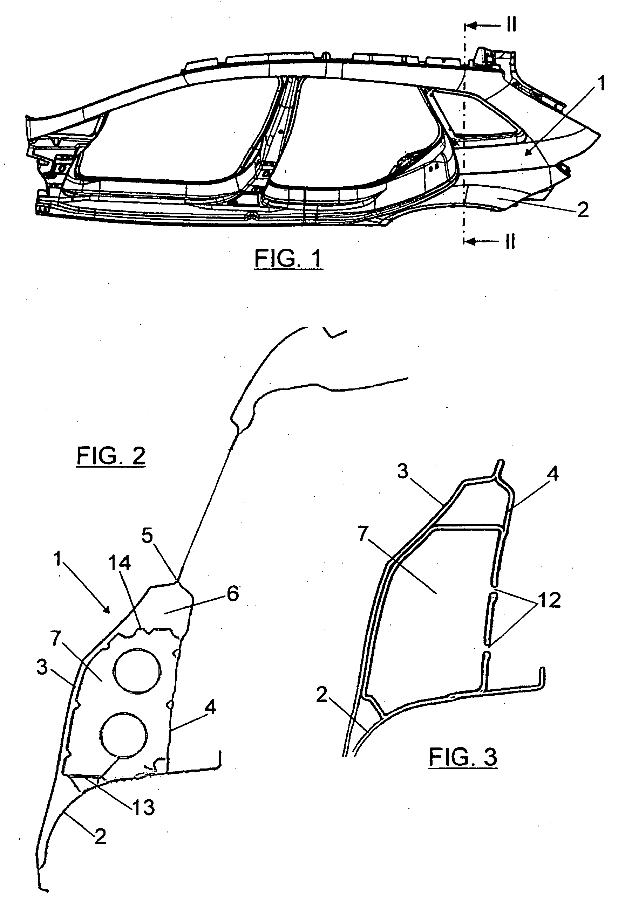

In Figure 1 it is shown, in a lateral elevation view, the body of a vehicle with the rear flank of the corresponding side, which is marked in general with reference 1, that is limited at its lower part by the wheel arch 2 of the same side.

As it can be better appreciated in Figure 2, the flanks are limited by an external wall 3 and an internal wall 4 that converge at the uppermost part in a joining area 5, while at the lower part they reach the wheel arch 2 of the same side. Between the external 3 and internal 4 walls and the wheel arch 2 there is delimited a chamber 6 in which, according to the invention, a transverse reinforcement plate 7 is provided in a noticeably vertical position which is supported against the external and internal 4 walls and against the wheel arch 2 for its union thereto, as it is shown in more detail in Figure 3. The joint of the reinforcement plate 7 to the internal wall 4 and to the wheel arch 2 may be made by means of welding points, while the joint to the external wall 3 may be made by means of an adhesive. The reinforcement plate (7) is provided with a lower transverse edge (13) coincident with a facing area of the wheel arch (2) and a free upper transverse edge (14) passing between the external (3) and internal (4) walls.

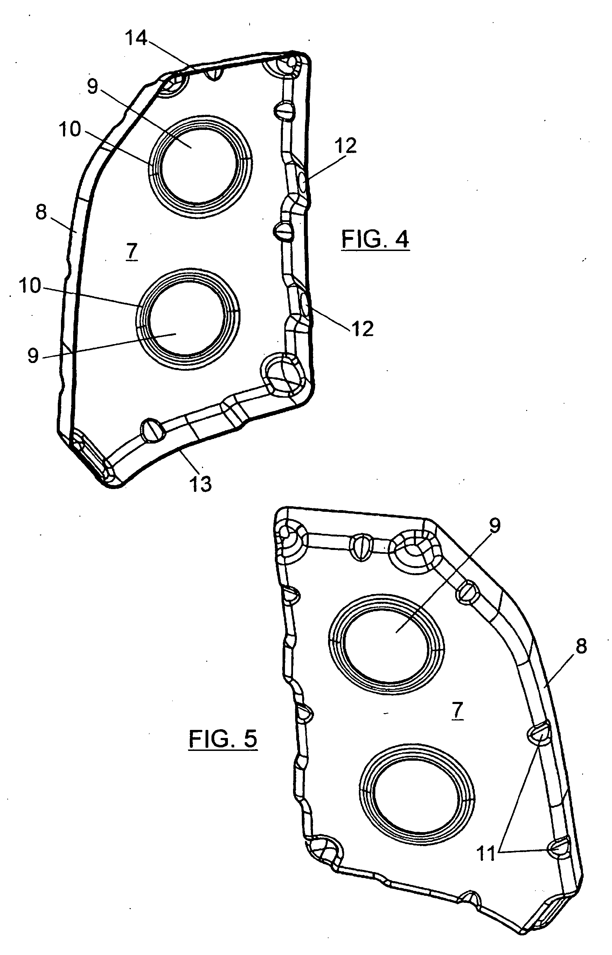

In Figures 4 and 5 it is shown an embodiment of the reinforcement plate 7, which is finished on one of its surfaces by a continuous peripheral rib 8, with which it is achieved the enlargement of the support area or, surface between said reinforcement plate and the external 3 and internal 4 walls and the wheel arch 2. These ribs will present an outline coincident with that of the opposing support areas against the external 3 and internal 4 walls and the wheel arch 2.

The plate 7 may present openings 9 of shaped edges 10 that will help to reduce the weight of the plate and increase the rigidity thereof.

Preferably the edge defined between the rib 8 and the plate 7 will be rounded and provided with wedges or transverse deep drawings 11 which will serve as reinforcement means as well.

In order to ensure the correct placement of the reinforcement plate 7 on the body flanks, the peripheral rib 8 and the internal wall 4 of the flank may be provided with points of reference which may consist of facing orifices 12 placed at different heights so that the facing position thereof, shown in Figure 3, will correspond to the correct transverse position of the reinforcement plate 7.

The arrangement of the reinforcement plate on the rear flanks of the body, in the form described, serves as a stiffening element which will prevent the vibrations of the external and internal walls of the flanks, offering a greater strength to these areas and eliminating the risk of generating noise therein due to vibrations of the walls forming the flanks.

## Claims

1. Stiffening element for the rear flanks of motor vehicle bodies, which flanks comprise an internal wall (4) and an external wall (3) which converge at their upper part and reach the rear wheel arch (2) at their lower part, **characterized in that** it consists of a reinforcement plate (7) which is mounted in a transverse way, at an approximately vertical position, between said walls (3,4) and rear wheel arch (2) on which it is supported and to which it is joined; which plate (7) presents vertical edges coincident with the outline of the facing areas of the internal and external walls (3,4) cited, for its supporting thereon and joining thereto; and a free upper transverse edge (14) running between the external and internal walls (3,4).

2. An element according to claim 1, **characterized in that** the aforementioned reinforcement plate (7) is joined to the internal wall (4) and rear wheel arch (2) by means of welding and to the external wall (3) by means of an adhesive.

3. An element according to claim 1, **characterized in that** the aforementioned reinforcement plate (7) is surrounded, on one of its surfaces, by a peripheral rib (8) through which it is supported and joined to the walls (3,4) and rear wheel arch (2) of the flanks.

4. An element according to the preceding claims, **characterized in that** the aforementioned plate (7) presents intermediate openings (9) of determined edges (10), which act as a reinforcement and weight reduction means.

5. An element according to claims 1 and 3, **characterized in that** the aforementioned peripheral rib (8) and at least one of the opposing surfaces of the flank to which it is joined, present points of reference which determine the correct placement of the reinforcement plate.

6. An element according to claim 5, **characterized in that** the aforementioned points of reference consist of opposing orifices (12) which present the peripheral rib (8) and the internal wall (4) of the flank as areas of joint support.

7. An element according to claim 3, **characterized in that** the edge between the plate and the peripheral rib (8) are rounded and present transverse reinforcement deep drawings (11).

## Patentansprüche

1. Verstärkungselement für die hinteren Kotflügel einer Fahrzeugkarosserie, welche eine Innenwand (4) und eine Aussenwand (3) umfassen, die an ihrem oberen Teil aufeinandertreffen und an ihrem unteren Teil den hinteren Radkasten (2) erreichen, **dadurch gekennzeichnet, dass** es aus einem Verstärkungsblech (7) besteht, das quer in ungefähr vertikaler Richtung montiert ist, zwischen besagten Wänden (3,4) und dem hinteren Radkasten (2) auf dem es sich abstützt und mit dem es verbunden ist; besagtes Blech (7) weist vertikale Ränder auf, die mit dem Umriss der gegenüberliegenden Bereiche der besagten Innen- und Aussenwände (3,4) übereinstimmen, zur Abstützung darauf und Verbindung damit, sowie eine freie obere Querkante (14), die zwischen den Aussenwänden und Innenwänden (3,4) verläuft.

2. Element gemäss Anspruch 1, **dadurch gekennzeichnet, dass** das erwähnte Verstärkungsblech (7) mit der Innenwand (4) und dem hinteren Radkasten (2) durch Schweissen verbunden ist, und mit der Aussenwand (3) durch Verkleben verbunden ist.

3. Element gemäss Anspruch 1, **dadurch gekennzeichnet, dass** das erwähnte Verstärkungsblech (7) auf einer seiner Oberflächen von einer umlaufenden Rippe (8) umgeben ist, durch welche es mit den Wänden (3,4) und dem hinteren Radkasten (2) der Kotflügel verbunden ist und sich abstützt.

4. Element gemäss einem der vorangehenden Ansprüche, **dadurch gekennzeichnet, dass** das erwähnte Verstärkungsblech (7) Zwischenöffnungen (9) bestimmter Ränder (10) aufweist, die zur Verstärkung und zur Gewichtreduzierung dienen.

5. Element gemäss Anspruch 1 und 3, **dadurch gekennzeichnet, dass** die erwähnte umlaufende Rippe (8) und mindestens eine der gegenüberliegenden Oberflächen des Kotflügels, mit dem sie verbunden ist, Orientierungspunkte aufweisen, die die korrekte Positionierung des Verstärkungsblechs bestimmen.

6. Element gemäss Anspruch 5, **dadurch gekennzeichnet, dass** die erwähnten Orientierungspunkte aus gegenüberliegenden Öffnungen (12) bestehen, die die umlaufende Rippe (8) und die Innenwand (4) des Kotflügels als gemeinsame Stützflächen aufweisen.

7. Element gemäss Anspruch 3, **dadurch gekennzeichnet, dass** die Kanten zwischen dem Blech und der umlaufenden Rippe (8) abgerundet sind und querverlaufende Tiefziehungen (11) zur Verstärkung aufweisen.

## Revendications

1. Elément de renforcement pour les flancs postérieurs des carrosseries des automobiles, dont les flancs comportent une paroi intérieure (4) et une paroi extérieure (3) convergeant vers le haut et arrivent a l'arc (2) de la roue arrière dans sa partie inférieure, **caractérisé en ce qu'**il se compose d'une plaque de renforcement (7) montée transversalement à peu près verticalement entre lesdites parois (3, 4) et l'arc (2) de la roue arrière, sur le quel est supportée et a la quelle est reliée, dont la plaque (7) comporte des bords verticaux qui correspondent au profil des surfaces opposées des précitées parois intérieure et extérieure (3, 4) pour son support et liaison aux mêmes, et un bord transversal libre supérieure (14) qui s'étend entre les parois intérieure et extérieure (3, 4).

2. Elément selon la revendication 1, **caractérisé en ce que** la plaque de renforcement précitée (7) est fixé à la paroi intérieure (4) et l'arc (2) de la roue arrière au moyen d'une soudure, et la paroi extérieure (3) au moyen d'un adhésif.

3. Elément selon la revendication 1 **caractérisé en ce que** la plaque de renforcement précitée (7) est entouré, sur une de ses surfaces, par une nervure périphérique (8) à travers lequel est supporté et fixé sur les parois (3, 4) et a l'arc (2) des flancs de la roue arrière.

4. Elément selon l'une quelconque des revendications précédentes, **caractérisé en ce que** la plaque précitée (7) présente des ouvertures intermédiaires (9) avec des bords déterminés (10) avec la fonction de moyens de renforcement et de réduction du poids.

5. Elément selon les revendications 1 et 3, **caractérisé en ce que** la dite nervure périphérique (8) et au moins l'une des surfaces opposées du flanc au quel elle est fixée, a des points de référence qui déterminent le placement correct de la plaque de renforcement.

6. Elément selon la revendication 5, **caractérisé en ce que** les points de référence mentionnés ci-dessus sont constitués par des trous opposés (12) sur la nervure périphérique (8) et la paroi intérieure (4) des flancs comme zones d'appui communes.

7. Elément selon la revendication 3, **caractérisé en ce que** le bord entre la plaque et la nervure périphérique (8) sont arrondies et elles ont des emboutissages profonds (11) de renforcement transversal.
